# EUROPEAN PATENT APPLICATION

(11) **EP 3 633 575 A1**
(43) Date of publication of application: **08.04.2020**
(21) Application number: 18425093.4
(22) Date of filing: 30.11.2018
(51) Int. Cl.: G06Q 20/40, G06Q 20/10

(54) **BUY - BYE- PAY**

(30) Priority: 02.10.2018 IT 201800009079
(71) Applicant: Mancini, Giancarlo, 00195 Roma (IT)
(72) Inventor: Mancini, Giancarlo, 00195 Roma (IT)
(74) Representative: Fiammenghi, Eva

(57) **Abstract**

Buy - Bye - Pay (BBP) frees anyone, especially the small-medium entrepreneur from ordinary, frequent, repetitive payment transactions.

The BBP system, providing a total guarantee, both qualitatively and quantitatively, of the accounting transaction carried out, allows the delegation to a subject, even if not necessarily of trust, in order to carry out pre-defined payment transactions.

Every day, professionals, entrepreneurs and business owners entrust employees with bureaucratic tasks, but almost never manage their money or their current account.

With BBP instead the entrepreneur "trusts and relies".

After pre-setting the maximum amount, type of operation and beneficiaries, the account holder, or the person entitled to operate on the same, can safely delegate anyone, including the caregiver, a domestic worker or a temporary assistant, without the same to view the balance or extract of the current account, to make payments in the most complete certainty and security that can operate only and exclusively within the limits of what has been pre-authorized.

Think of the convenience of avoiding cash withdrawals and then handing them to those who have to make a payment, checking in any case the regularity of the same as well as the honesty of the person who made it.

With BBP instead anyone, comfortably, from home, from the office or even traveling, can verify the operation and the correctness of the same thanks to the verification carried out by the bank.

## Description

### § 1. Introduction

Buy - Bye - Pay is an idea that offers a new and useful service, simply taking advantage of the normal technology already used in payments.

BBP, in addition, increases the security of electronic payments, reducing the risks of online theft of sensitive data.

The Word Case it is addressed to is the individual who gives money to a person to make a precise payment. Currently the owner of the funds delivers cash to the trustworthy person and subsequently checks his work. The current technology, limited to electronic payments, allows the bank, appropriately educated, to carry out checks.
- With Buy - Bye - Pay the account holder orders the bank what limits the trustworthy person must have to operate.
- The trusted person manages the purchase by making the electronic payment.
- The bank allows payment only within the limits originally set.

Bye - Buy - Pay organizes the work, discipline the boundaries of the rights and duties of the people involved.

BBP is a contract between the customer and the bank, which is additional to the current account with the option of online access.

As will be seen below, BBP increases access to payment security.

### § 2 - Scheme

The operational steps are:
1. The holder of an account, or the person entitled to act on it, hereinafter referred to as the holder, knows that he can entrust a trusted person to manage regular, systematic, repetitive purchases.
2. The holder asks the bank for passwords in addition to their own; the holder, in stipulating the BBP contract with the bank, has defined operating limits on those passwords.
3. The account holder communicates the additional passwords to the trusted person.
4. BBP implies a relationship of trust between the owner and the future user of the additional passwords; it will be seen that BBP actually increases payment security for the benefit of the holder.
5. The trusted person contacts the supplier, orders, receives the goods, checks; at the time of paying, instead of contacting the account holder for the payment, enters the internet on the bank's website of the holder, inserts the additional password.
6. The bank receives the online access request with the additional credentials and, if correct, shows the data on the previous payments according to what is requested and as far as it can within the information limits indicated in the BBP contract.
7. The user of the additional credentials completes the payment request.
8. The bank can offer the user additional credentials, a simpler and faster way to order something.
9. The bank receives the request for payment and verifies that it falls within the limits set out in point 2.
10. The bank carries out further checks on the request, both deriving from the current account (for example capacity of the balance) and by law.
11. The bank processes the request.
12. The bank provides information both to the user of the additional passwords and to the account holder about the access, about the request, about what the bank has done.
13. The account holder accepts the work of the bank within the limits imposed on additional passwords.
14. The user who accesses the service through additional credentials accepts, when using them, that the account holder is informed by the bank of his work.

### Credential device limits.

When the account holder receives additional credentials, he decides that the payment transactions authorized with those credentials can go to one beneficiary or to a list of beneficiaries. For each beneficiary, the account holder must decide and report in the BBP contract:
- the bank details of the beneficiary (IBAN);
- the maximum amount of the individual payment;
- the maximum frequency of payments in the unit of time (day, week, month ..);
- the maximum amount of their accumulation, in the unit of time;

The account holder can also decide and transcribe in the BBP contract:
- to associate an online image or photo to each beneficiary (eg the photo of the trusted provider);
- to associate each beneficiary with a name (or nickname) chosen by the owner himself; if not for other legal obligations, it is not obligatory that it is the official name of the beneficiary.

The account holder can decide to put a constraint on those credentials regardless of the beneficiary. That is, the owner decides:
- the maximum amount of the single payment that can be authorized with those credentials;
- the maximum amount of cumulative payments authorized with those credentials independently of the beneficiaries of payments;
- the time limit in which to calculate this sum and the way in which it is to be calculated.

### Bank operation:

When the bank receives an access request online that authenticates with the additional credentials, check the correctness of the additional credentials entered;
1. if the request is not correct, it responds negatively to the user and prevents him from continuing;
2. if the request is correct, the bank allows the user to make the request; Once the request has been entered, the bank checks the request:
   to. If the request is within the limits of the law and of Compliance, the bank carries out the checks and activities described in the current account contract (for example, capacity of the balance); if it does not fit in, it proceeds as per a current account contract;
   b. If the request can be processed, the bank checks whether it falls within the limits assigned to those additional credentials:
      the. If it does not fall within the limits, it excludes the continuation of the operation to the user;
      ii. If it falls, the request is processed.

Every time the bank prevents the user from continuing and in any case, after making the request, the bank informs the user of the additional credentials and the holder of what has been done. In the BBP contract with the holder is indicated, expected and described how to do it.

If the possibility exists in the BBP contract that the user can cancel a previous operation, in the access screens must be shown how to intervene.

### Information requirements.

It may be necessary for the user of the additional credentials, before making the payment, to check if, which, when other payments have been made and / or to carry out other checks.

With this objective, the holder must decide and have it written down in the BBP contract:
- what information can be provided to the user of the additional credentials before the on-line request; the account holder, a priori and during the contract phase must choose whether:
   or the user can see all the operations of the account;
   or the user can only see transactions with the beneficiary associated with his credentials;
   or the user can see any payments from that beneficiary (assuming they are refunds, credit notes, etc.);
   or the user can only see the authorized operations with his additional credentials;
- what information should be provided to the user of the additional credentials after the online request;
- what information should be provided to the user of the additional credentials if the online request is refused (for example if the account balance is not large);
- what access information with additional credentials should be provided to the account holder: when they will be provided and how;
- what information on the operations carried out must be provided to the account holder and how they are to be provided.
- how and if the user of the credentials can intervene to correct any mistakes made by him or the bank.

The account holder, in the BBP contract, in deciding whether and what information should be provided to the holder and the user of the additional credentials, indicates to the bank how and to what references this information should be provided.

The bank provides information according to what is indicated in the BBP contract and according to whether the request received has been authorized with the credentials of the holder or with additional credentials.

### § 6 - Rights and duties of the Actors specifically reported in the account

The client holder accepts the actions of the bank following orders received after authentication with additional credentials that fall within the limits of the BBP contract. It is not of interest, and in any case does not fall under the responsibility of the bank, the natural person who uses those credentials.

The bank has the obligation to make, within the limits of the law, within the limits of the current account contract, within the limits of the BBP contract, as requested by the user who provides the additional credentials.

The account holder, within the limits of the law and within the limits agreed in the current account relationship, decides whether the user of the additional credentials can cancel an already ordered transaction. The bank must in any case provide the holder of the current account with the way in which he can intervene to challenge or cancel an operation carried out.

The user of the additional credentials uses them on the basis of an agreement, written or verbal, with the account holder. The bank may or may not know the name of the user of the additional credentials but only for the purposes of the banking obligations of the law, anti-money laundering, anti-terrorism, both in the country of account and in the countries involved in the same banking operations. In the BBP contract, the Bank and the user of the additional credentials have no relationship. The user of the restricted credentials may in any case use them, within the contracted limits, for purposes other than those desired by the account holder, but this is the risk of the relationship between the owner and his charge to manage the payment.

The bank can ask the user for additional credentials to change the credentials on first access. The account holder is, in any case, liable to the bank as to the bank for all the requests that will be made to the bank, authorized with the additional credentials eventually modified.

The account holder, for the purposes of any legal obligations in payments, is responsible both as it is the owner of the funds, both in signing the contract, has already indicated the limits of credentials or primarily the possible beneficiaries, entities and frequency of possible payments. For future legal obligations to the BBP contract, the manager and contact person of the bank, is only the account holder. The bank has no obligation to the user for additional credentials.

Before accepting a BBP contract from the client, the bank can check whether the payments that will require and described in the list of limits assigned to the credentials are at risk of reporting to the supervisory body. The bank may require that future payments have a standard purpose or do not disclose in the causal fields information that carries the risk of reporting for anti-money laundering purposes.

The owner decides whether the bank is authorized to offer the user additional credentials a faster procedure to be recognized and to place orders. If so, the owner knows and accepts this procedure. This eventuality is reported in the BBP contract. Before allowing a faster procedure to order payments, the bank checks whether this procedure increases the banking risks in the event of an ex-post payment dispute. If it increases, it verifies the convenience.

The account holder must know and accept what information and how it will be provided to the user. In particular, the holder must know that, if the requested payment exceeds the account balance, the payment will be refused by the bank and the user will be informed of it. The account holder, in the BBP contract, accepts all the consequences even if the bank, by refusing the user a request that exceeds the account balance, implicitly provides the user with information on the balance.

The user of the additional credentials must know and accept what information the bank will provide or can provide to the account holder. In this regard, the bank must take precautions against the latter's privacy claims.

The bank is obliged to collect information on access attempts, accesses, orders given to the bank and how the bank has operated, under the law, the current account contract, additional clauses provided for by the BBP contract. This information is kept by the bank at least within the thirteen months (13) from payment. The bank is obliged to provide this information to both the holder and third parties in compliance with the law in force in the country of the account, the current account contract with the holder, the individual BBP contract with the holder. The information that the bank provides is information with evidential value. The information is complete and immediate. The account holder, in the relationship with the bank, assumes the risk of fraud, theft, fraudulent use of additional credentials in accordance with the legislation in force in the country in which the current account contract is activated and as per the current account contract.

The account holder must be able to revoke additional credentials at any time and must be able to revoke any payment within the limits imposed by law, by the current account, contract, by the BBP contract. The Bank must be able to revoke additional credentials at any time.

In the BBP contract it should be reported whether the user of the additional credentials is also allowed to revoke his credentials online.

If the bank suspects that it is undergoing a fraudulent online access attempt, it may refuse access by informing the account holder. In the case of fraudulent access attempts, it may be admitted that the user of the additional credentials can physically access the bank. These cases must be explicitly defined in the BBP contract and the account holder must indicate in the contract the natural person to whom he provides the additional credentials.

The possibility that the customer user of the additional credentials may be physically present in the bank and request information both on the account and on access attempts may be contemplated. For example in the case where the use of additional credentials may have been suspended for security reasons.

### § 7 - Security of BBP

In reality BBP alone escapes any fear about the possibility that others may know and operate on their behalf. The person of trust can not technically have other behaviors outside the mandate received for the beneficiary, amount and frequency constraints that have his credentials. The trustworthy person then knows that his entire work will be traced by the bank and can be communicated to the holder without the person of trust knowing it.

On the other hand the person of trust, if he wanted, could cheat the holder in other ways. For example, buying goods that are actually poor or inferior to what was contracted in exchange for personal favors. Or keeping with the seller high prices of the goods in exchange for favors. Of this the owner is conscious and is also aware of the difficulty of discovering it.

In reality, BBP increases the security of payments. This is because, by reducing the use of the owner's passwords, it reduces the possibility of online credentials being stolen. It then reduces the risk that third parties may find out how the owner has hidden or hidden passwords.

Conversely, additional passwords are used more. However, these are of lower risk, being bound as a beneficiary and as an amount.

Making a deliberately exaggerated and absurd example, the use of the owner's passwords even for small, frequent, habitual, purchases, appears as having to go to the market to buy bread, fruit, vegetables, put in the wallet all of their money: while with the credentials of the holder you can order a payment that drains the account balance, with additional credentials this is not possible.

### Additional security requirements.

The account holder may have utility and need for the user of the additional credentials not to know the payee's IBAN. The account holder may also have utility and need to be able to change the counterpart simply and effectively for a systematic type of purchases. For example, a restaurant owner may want to decide to buy vegetables from one or another wholesaler. With BBP it will suffice to indicate a fake name of the seller (e.g. "fruit and vegetables"); every time the trusted person will have to pay for it, just click on the fancy name. If the holder wants to change wholesaler, just change the IBAN associated with that fancy name.

### § 9 - Conclusion.

It is not forbidden to allow third parties to access their account. It simply is not appropriate for potential thefts and scams. BBP uses current technology in payments by preventing or severely restricting theft and fraud. The consequence is therefore the reorganization of the indicated Word Case.

Actually, BBP is a step forward in the new dimension that moves from the universe of cash payments to the universe of electronic payment

## Claims

1. The patent that the inventor is presenting refers to the possibility for the holder of a current account to grant power to third parties, to arrange transfers from his account with the guarantee of the Payment Service Provider (PSP) that the predetermined constraints are respected.
The constraints are set by the account holder and are to refer to:
• Possible beneficiaries
• Maximum amount of each individual payment
• Maximum amount of total payments in the unit of time
It is particularly useful because at least the holder uses his classic credentials the more:
• Reduces the risk of credential theft
• Reduces the risk of identity theft
• It is lightened compared to daily requirements, delegating and circumscribing the scope of operations to third parties, even if not necessarily of trust
• Can be sure of the intended use of the sums spent
The inventor then claims the idea of the Buy Bye Pay contract only between the account holder, in the case of a legal entity only limited to the Small and Medium Business, and its payment service provider (PSP).
Pursuant to and for the purposes of this additional private contract, which is added to the traditional current account contract, the Payment Service Provider is therefore obliged to accept payments also with the additional predefined credentials by subjecting said payments to predefined restrictions, as transcribed in the BBP contract between the user and the payment service provider.
The payment service provider must not be informed nor has the power / duty to verify the identity of the user alias third party delegated by the BBP.
The user of the aforementioned additional credentials can modify them after the first access and, in any case, independently of the account holder, which is however - -guaranteed by the PSP about compliance with the preset restrictions.
